(19) 

Europäisches
Patentamt
European
Patent Office
Office européen
des brevets

(11) **EP 1 767 605 A1**

(12) **EUROPEAN PATENT APPLICATION**
published in accordance with Art. 158(3) EPC

(43) Date of publication:
 **28.03.2007   Bulletin 2007/13**

(21) Application number: **05748623.5**

(22) Date of filing: **08.06.2005**

(51) Int Cl.:
 ***C09J 7/02*** *(2006.01)*

(86) International application number:
 **PCT/JP2005/010511**

(87) International publication number:
 **WO 2005/123859 (29.12.2005 Gazette 2005/52)**

(84) Designated Contracting States:
 **BE FR TR**

(30) Priority:  **21.06.2004   JP  2004182242**

(71) Applicant: **Lintec Corporation**
 **Tokyo 173-0001 (JP)**

(72) Inventors:
 • **KATO, Kiichiro,**
  **c/o LINTEC CORPORATION**
  **Warabi-shi, Saitama 3350005 (JP)**

 • **TSUDA, Kazuhiro,**
  **c/o LINTEC CORPORATION**
  **Warabi-shi, Saitama 3350005 (JP)**
 • **MATSUBAYASHI, Yumiko,**
  **c/o LINTEC CORPORATION**
  **Warabi-shi, Saitama 3350005 (JP)**

(74) Representative: **Nicholls, Michael John**
 **J.A. KEMP & CO.**
 **14, South Square**
 **Gray's Inn**
 **London WC1R 5JJ (GB)**

(54) **ADHESIVE SHEET**

(57)     To provide a pressure-sensitive adhesive sheet according to which air entrapment and blistering can be prevented or eliminated through through-holes, and yet the through-holes are not readily visible at the substrate surface, and moreover a good appearance can be maintained even under an environment in which liquid becomes attached after the pressure-sensitive adhesive sheet has been stuck on, in a pressure-sensitive adhesive sheet 1 comprising a substrate 11 and a pressure-sensitive adhesive layer 12, a plurality of through-holes 2 passing through from one surface to the other surface of the pressure-sensitive adhesive sheet 1 are formed through laser processing, and here the through-holes 2 are made to have a diameter at a surface of the substrate 11 of from 0.1 to 42 $\mu$m, the through-holes 2 are made to have a diameter at a pressure-sensitive adhesive surface of the pressure-sensitive adhesive layer 12 of from 0.1 to 125 $\mu$m, a volume per through-hole 2 "V ($\mu$m$^3$/hole)" in the substrate 11 and the pressure-sensitive adhesive layer 12 is made to satisfy following expression (1)

$$8.00 \times 10^{-3} \leq V/t \leq 1.00 \times 10^{4} \qquad (1)$$

(wherein t ($\mu$m) is the total thickness of the substrate 11 and the pressure-sensitive adhesive layer 12), and the through-holes are made to have a hole density of from 30 to 50,000 per 100 cm$^2$.

EP 1 767 605 A1

## Fig.1

**Description**

TECHNICAL FIELD

The present invention relates to a pressure-sensitive adhesive sheet according to which air entrapment and blistering can be prevented or eliminated.

BACKGROUND ART

When sticking a pressure-sensitive adhesive sheet onto an adherend by hand, entrapment of air between the adherend and the pressure-sensitive adhesive surface may occur, marring the appearance of the pressure-sensitive adhesive sheet. Such air entrapment is particularly prone to occur in the case that the pressure-sensitive adhesive sheet has a large area.

To eliminate problems with appearance of a pressure-sensitive adhesive sheet due to air entrapment, another pressure-sensitive adhesive sheet may be stuck on in place of the preceded pressure-sensitive adhesive sheet, or the attached pressure-sensitive adhesive sheet may be peeled off and then reattached, or a hole may be made with a needle in a blistered portion of the pressure-sensitive adhesive sheet soastoallowtheairtoescape. However, in the case of sticking on in place of pressure-sensitive adhesive sheet, effort is required, and furthermore the cost is increased; moreover, in the case of reattaching the original pressure-sensitive adhesive sheet, problems often arise such as the pressure-sensitive adhesive sheet tearing, wrinkles forming on the surface, or the adhesiveness dropping. On the other hand, the method of making a hole with a needle mars the appearance of the pressure-sensitive adhesive sheet.

To prevent air entrapment from occurring, there is a method in which water is put onto the adherend or the pressure-sensitive adhesive surface in advance before the two are stuck together; however, in the case of sticking on a pressure-sensitive adhesive sheet having large dimensions such as a safety film stuck onto a window, a decorative film or a marking film, much time and effort is required. Moreover, there is a method in which air entrapment is prevented from occurring by sticking on the pressure-sensitive adhesive sheet using a device rather than by hand; however, depending on the use of the pressure-sensitive adhesive sheet or the site or shape of the adherend, it may not be possible to use such a device for sticking on the pressure-sensitive adhesive sheet.

Meanwhile, a resin material such as an acrylic resin, an ABS resin, a polystyrene resin or a polycarbonate resin may emit a gas upon heating or even with no heating; in the case of sticking a pressure-sensitive adhesive sheet onto an adherend made of such a resin material, blistering may occur on the pressure-sensitive adhesive sheet due to the gas emitted from the adherend.

Moreover, in the case of sticking a pressure-sensitive adhesive sheet onto an adherend made of a resin through which gas readily permeates, gas that has permeated through may build up between the adherend and the pressure-sensitive adhesive sheet, so that the pressure-sensitive adhesive sheet blisters or peels off. For example, in the case that a marking sheet is stuck onto a motorbike gasoline tank made of polyethylene resin, vapor of gasoline in the gasoline tank may vaporize so as to permeate through the polyethylene resin layer of the gasoline tank, so that the marking sheet blisters or peels off, bringing about an undesirable situation such as the appearance being marred.

To solve such problems, with a pressure-sensitive adhesive sheet described in Japanese Patent Application Laid-open No. H2-107682, a substrate and a pressure-sensitive adhesive layer are subjected to punching processing using a blade die and a hole die so as to form through-holes of diameter from 0.2 to 1.0 mm therein, and with a pressure-sensitive adhesive sheet described in Japanese Utility Model Application Laid-open No. H4-100235, a substrate and a pressure-sensitive adhesive layer are subjected to perforation processing using a hot needle so as to form through-holes of diameter from 0.05 to 0. 15 mm therein; air or gas escapes from these through-holes to the outside, whereby air entrapment and blistering of the pressure-sensitive adhesive sheet are prevented.

DISCLOSURE OF THE INVENTION

PROBLEM TO BE SOLVED BY THE INVENTION

However, with a pressure-sensitive adhesive sheet as described above, the through-holes can be seen clearly with the naked eye, and hence the appearance of the pressure-sensitive adhesive sheet has not necessarily been good. Moreover, there has been a problem that if liquid such as water or gasoline becomes attached to the pressure-sensitive adhesive sheet after the pressure-sensitive adhesive sheet has been stuck onto an adherend, then this liquid may enter into the through-holes, causing the through-hole portions (portions around the peripheries of the through-holes) to swell or the like so that the appearance of the pressure-sensitive adhesive sheet is marred.

The present invention has been devised in view of the above state of affairs; it is an object of the present invention to provide a pressure-sensitive adhesive sheet according to which air entrapment and blistering can be prevented or eliminated through through-holes, and yet the through-holes are not readily visible at the substrate surface, and moreover a good appearance can be maintained even under an environment in which liquid becomes attached after the pressure-sensitive adhesive sheet has been stuck on.

## MEANS FOR SOLVING THE PROBLEM

To attain the above object, the present invention provides a pressure-sensitive adhesive sheet comprising a substrate and a pressure-sensitive adhesive layer, the pressure-sensitive adhesive sheet having formed therein through laser processing a plurality of through-holes passing through from one surface to the other surface of the pressure-sensitive adhesive sheet, wherein the through-holes have a diameter at a surface of the substrate of from 0.1 to 42 $\mu$m, the through-holes have a diameter at a pressure-sensitive adhesive surface of the pressure-sensitive adhesive layer of from 0.1 to 125 $\mu$m, taking a total thickness of the substrate and the pressure-sensitive adhesive layer to be t ($\mu$m), and a volume per through-hole in the substrate and the pressure-sensitive adhesive layer to be V ($\mu$m$^3$/hole), following expression (1) is satisfied:

$$8.00 \times 10^{-3} \leq V/t \leq 1.00 \times 10^{4} \qquad (1),$$

and the through-holes have a hole density of from 30 to 50,000 per 100 cm$^2$ (invention 1).

Note that in the present specification, "sheet" is deemed to include the idea of a film, and "film" is deemed to include the idea of a sheet.

According to the pressure-sensitive adhesive sheet of the above inventions (invention 1), air between an adherend and the pressure-sensitive adhesive surface escapes from the through-holes to the outside of the pressure-sensitive adhesive sheet front surface, and hence air tends not to be caught up when sticking the pressure-sensitive adhesive sheet to the adherend, i.e. air entrapment can be prevented from occurring. Even if air is caught up so that air entrapment occurs, by re-pressing the air-entrapped portion or an air-entrapped portion surrounding portion including the air-entrapped portion, the air can be made to escape from the through-holes to the outside of the pressure-sensitive adhesive sheet front surface, thus eliminating the air entrapment. Moreover, even if gas is emitted from the adherend after the pressure-sensitive adhesive sheet has been stuck onto the adherend, the gas will escape from the through-holes to the outside of the pressure-sensitive adhesive sheet front surface, whereby blistering can be prevented from occurring.

Moreover, according to the pressure-sensitive adhesive sheet in which the through-holes satisfy the above conditions, the through-holes are not readily visible with the naked eye at the substrate surface, and hence the appearance is excellent. Furthermore, even in the case that liquid such as water or gasoline becomes attached to the pressure-sensitive adhesive sheet after the pressure-sensitive adhesive sheet has been stuck onto an adherend, entering of this liquid into the through-holes and swelling the through-hole portions (portions around the peripheries of the through-holes) can be prevented, and hence the good appearance of the pressure-sensitive adhesive sheet can be maintained.

In the case of the above inventions (invention 1), preferably, the substrate has a surface roughness (Ra) of not less than 0.03 $\mu$m, a lightness (L*) in the L*a*b* color system of not more than 60 in the case of having a chroma (C*) of not more than 60 and a lightness (L*) of not more than 85 in the case of having a chroma (C*) greater than 60, and a contrast ratio of not less than 90% (invention 2).

Through the substrate satisfying the above conditions, the through-holes become invisible to the naked eye at the substrate surface, and hence the appearance of the pressure-sensitive adhesive sheet is further improved.

In the case of the above inventions (inventions 1 and 2), preferably, the diameter of the through-holes at the surface of the substrate is less than the diameter of the through-holes at the pressure-sensitive adhesive surface of the pressure-sensitive adhesive layer (invention 3). Through the diameter of the through-holes changing in this way, the through-holes become yet less visible at the substrate surface, and hence the appearance of the pressure-sensitive adhesive sheet is further improved.

## ADVANTAGEOUS EFFECT OF THE INVENTION

According to the pressure-sensitive adhesive sheet of the present invention, air entrapment and blistering can be prevented or eliminated through through-holes, and yet the through-holes are not readily visible at the substrate surface, and moreover a good appearance can be maintained even under an environment in which liquid becomes attached after the pressure-sensitive adhesive sheet has been stuck on.

BRIEF DESCRIPTION OF THE DRAWINGS

FIG. 1 is a sectional view of a pressure-sensitive adhesive sheet according to an embodiment of the present invention; and

FIG. 2 consists of sectional views showing an example of a method of manufacturing the pressure-sensitive adhesive sheet according to the embodiment of the present invention.

EXPLANATION OF REFERENCE NUMERALS

1: Pressure-sensitive adhesive sheet
11: substrate
12: pressure-sensitive adhesive layer
13: release liner
1A: substrate surface
1B: pressure-sensitive adhesive surface
2: through-hole

BEST MODE FOR CARRYING OUT THE INVENTION

Following is a description of an embodiment of the present invention.

[Pressure-sensitive adhesive sheet]

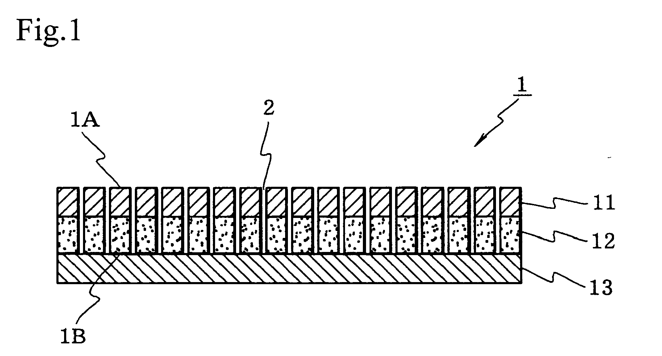

FIG. 1 is a sectional view of a pressure-sensitive adhesive sheet according to an embodiment of the present invention.

As shown in FIG. 1, the pressure-sensitive adhesive sheet 1 according to the present embodiment comprises a substrate 11, a pressure-sensitive adhesive layer 12, and a release liner 13 laminated on one another. Note, however, that the release liner 13 is peeled off when using the pressure-sensitive adhesive sheet 1.

A plurality of through-holes 2 penetrating through the substrate 11 and the pressure-sensitive adhesive layer 12 and thus pass from a substrate surface 1A to a pressure-sensitive adhesive surface 1B are formed in the pressure-sensitive adhesive sheet 1. When the pressure-sensitive adhesive sheet 1 is used, air between an adherend and the pressure-sensitive adhesive surface 1B of the pressure-sensitive adhesive layer 12 and gas emitted from the adherend escape from these through-holes 2 to the outside of the pressure-sensitive adhesive sheet front surface 1A, and hence as described later, air entrapment and blistering can be prevented or eliminated.

The through-holes 2 have a diameter at the substrate surface 1A of from 0.1 to 42 $\mu$m, preferably from 0.1 to 40 $\mu$m, and a diameter at the pressure-sensitive adhesive surface 1B of from 0.1 to 125 $\mu$m, preferably from 0.1 to 120 $\mu$m, and taking the total thickness of the substrate 11 and the pressure-sensitive adhesive layer 12 to be t ($\mu$m), and the volume per through-hole 2 in the substrate 11 and the pressure-sensitive adhesive layer 12 to be V ($\mu$m$^3$/hole), following expression (1) is satisfied:

$$8.00\times10^{-3} \leq V/t \leq 1.00\times10^{4} \qquad (1),$$

preferably following expression (2):

$$1.00\times10^{-1} \leq V/t \leq 9.00\times10^{3} \qquad (2).$$

According to the through-holes 2 satisfying the above conditions, air or gas can readily escape from the through-holes 2, and yet the through-holes 2 are not readily visible with the naked eye at the substrate surface 1A, and hence the appearance of the pressure-sensitive adhesive sheet 1 is excellent. Furthermore, even in the case that liquid such as water or gasoline becomes attached to the pressure-sensitive adhesive sheet 1 after the pressure-sensitive adhesive sheet 1 has been stuck onto an adherend, entering of this liquid into the through-holes 2 from the substrate surface 1A or from between the adherend and the pressure-sensitive adhesive surface 1B and swelling portions around the peripheries of the through-holes 2 can be prevented, and hence the good appearance of the pressure-sensitive adhesive sheet 1 can be maintained.

The diameter of the through-holes 2 may be constant in the thickness direction of the pressure-sensitive adhesive sheet 1, or may change in the thickness direction of the pressure-sensitive adhesive sheet 1. In the case that the diameter of the through-holes 2 changes in the thickness direction of the pressure-sensitive adhesive sheet 1, the diameter of the through-holes 2 at the substrate surface 1A is preferably smaller than the diameter of the through-holes 2 at the pressure-sensitive adhesive surface 1B. According to the diameter of the through-holes 2 changing in this way, the through-holes 2 become yet less visible at the substrate surface 1A, and hence the appearance of the pressure-sensitive adhesive sheet 1 is further improved.

The hole density of the through-holes 2 is in a range of 30 to 50,000 per 100 cm$^2$, preferably 100 to 10,000 per 100 cm$^2$. If the hole density of the through-holes 2 is less than 30 per 100 cm$^2$, then it will be difficult for air or gas to escape, whereas if the hole density of the through-holes 2 is greater than 50, 000 per 100 cm$^2$, then the mechanical strength of the pressure-sensitive adhesive sheet 1 will be lowered.

The through-holes 2 are formed through laser processing, described below. Through the laser processing, minute through-holes with good air escaping ability can easily be formed at a desired hole density.

There are no particular limitations on the substrate 11 so long as the through-holes 2 as described above can be formed therein, but through the substrate 11 satisfying the following conditions, the through-holes 2 become invisible to the naked eye at the substrate surface 1A, and hence the appearance of the pressure-sensitive adhesive sheet 1 is further improved.

(1) The surface roughness (Ra) is not less than 0.03 $\mu$m, preferably not less than 0.1 $\mu$m, particularly preferably not less than 0.14 $\mu$m.

(2) In the L*a*b* color system, in the case that the chroma (C*) is not more than 60, the lightness (L*) is not more than 60, preferably not more than 55, whereas in the case that the chroma (C*) is greater than 60, the lightness (L*) is not more than 85, preferably not more than 80.

(3) The contrast ratio is not less than 90%, preferably not less than 95%.

Here, the surface roughness (Ra: Roughness average) is in accordance with JIS B0601. L*, a*, b* and C* are in accordance with JIS Z8729, the relationship between C*, a* and b* being given by $C* = (a*^2 + b*^2)^{1/2}$. The contrast ratio is in accordance with JIS K5400.

Examples of the material of the substrate 11 include a resin film, a metal foil, paper, a resin film having metal deposited thereon by vapor deposition, paper having metal deposited thereon by vapor deposition, fabric, nonwoven fabric, or a laminate of the above. These materials may contain any of various additives such as inorganic fillers, organic fillers, and ultraviolet absorbers.

The surface of the material may have a decorative layer formed thereon by a method such as printing, painting, transfer printing, vapor deposition, or sputtering, or may have formed thereon an undercoat layer such as an adhesion facilitating coat for forming such a decorative layer, or a gloss adjusting coat, or may have formed thereon a topcoat layer such as a hard coat, an antifouling coat, or a surface roughness or specular gloss adjusting coat. Moreover, such a decorative layer, undercoat layer or topcoat layer may be formed over the whole surface of the material, or may be formed on only part surface of the material.

As a resin film, there can be used, for example, a film or a foamed film made of a resin such as a polyolefin such as polyethylene or polypropylene, a polyester such as polyethylene terephthalate or polybutylene terephthalate, polyvinyl chloride, polystyrene, a polyurethane, a polycarbonate, a polyamide, a polyimide, polymethyl methacrylate, polybutene, polybutadiene, polymethylpentene, an ethylene-vinyl acetate copolymer, an ethylene-(meth)acrylic acid copolymer, an ethylene-(meth) acrylate ester copolymer, an ABS resin, or an ionomer resin, or a thermoplastic elastomer containing a component such as a polyolefin, a polyurethane, polystyrene, polyvinyl chloride or a polyester, or a laminated film of the above. As the resin film, for example, one formed by a calender method, a T-die method, or an inflation method, or a casting method using a casting sheet can be used. Moreover, as paper, for example, woodfree paper, glassine paper, coated paper, laminated paper, lint-free paper, or Japanese paper can be used.

There are no particular limitations on the above casting sheet, for example, any of various types of paper, or a resin film such as polyethylene terephthalate, polypropylene, polyethylene or the like that has been subjected to release treatment with a release agent of a silicone type, a polyester type, an acrylic type, an alkyd type, a urethane type or the like or a synthetic resin can be used. The thickness of the casting sheet is generally approximately 10 to 200 $\mu$m, preferably approximately 25 to 150 $\mu$m.

The thickness of the substrate 11 is generally approximately from 1 to 500 $\mu$m, preferably from 3 to 300 $\mu$m, but may be changed as appropriate in accordance with the use of the pressure-sensitive adhesive sheet 1.

There are no particular limitations on the type of the pressure-sensitive adhesive constituting the pressure-sensitive adhesive layer 12 so long as the through-holes 2 can be formed therein; the pressure-sensitive adhesive may be any of an acrylic type, a polyester type, a polyurethane type, a rubber type, a silicone type, or the like. Moreover, the pressure-sensitive adhesive may be any of an emulsion type, a solvent type, or a solvent-less type, and may be either a crosslinked type or a non-crosslinked type.

The thickness of the pressure-sensitive adhesive layer 12 is generally approximately from 1 to 300 $\mu$m, preferably from 5 to 100 $\mu$m, but may be changed as appropriate in accordance with the use of the pressure-sensitive adhesive sheet 1.

There are no particular limitations on the material of the release liner 13; for example, a film or foamed film made of a resin such as polyethylene terephthalate, polypropylene or polyethylene, or paper such as glassine, coated paper or laminated paper that has been subjected to release treatment with a release agent such as a silicone type one, a fluorine type one or a long chain alkyl group-containing carbamate can be used.

The thickness of the release liner 13 is generally approximately from 10 to 250 $\mu$m, preferably approximately from 20 to 200 $\mu$m. Moreover, the thickness of the release agent in the release liner 13 is generally from 0.05 to 5 $\mu$m, preferably from 0.1 to 3 $\mu$m.

The through-holes 2 passing through the substrate 11 and the pressure-sensitive adhesive layer 12 are formed through laser processing, described below. Through the laser processing, minute through-holes with good air escaping ability can easily be formed at a desired hole density.

Note that the through-holes 2 in the pressure-sensitive adhesive sheet 1 according to the present embodiment penetrate through only the substrate 11 and the pressure-sensitive adhesive layer 12, but the through-holes 2 may also penetrate through the release liner 13.

Moreover, the pressure-sensitive adhesive sheet 1 according to the present embodiment has the release liner 13, but there is no limitation to this in the present invention; the pressure-sensitive adhesive sheet 1 may be provided no release liner 13. Furthermore, there are no particular limitations on the size, shape and so on of the pressure-sensitive adhesive sheet 1 according to the present embodiment. For example, the pressure-sensitive adhesive sheet 1 may be a tape comprising only the substrate 11 and the pressure-sensitive adhesive layer 12 (a pressure-sensitive adhesive tape), and may also be wound up into a roll.

[Production of pressure-sensitive adhesive sheet]

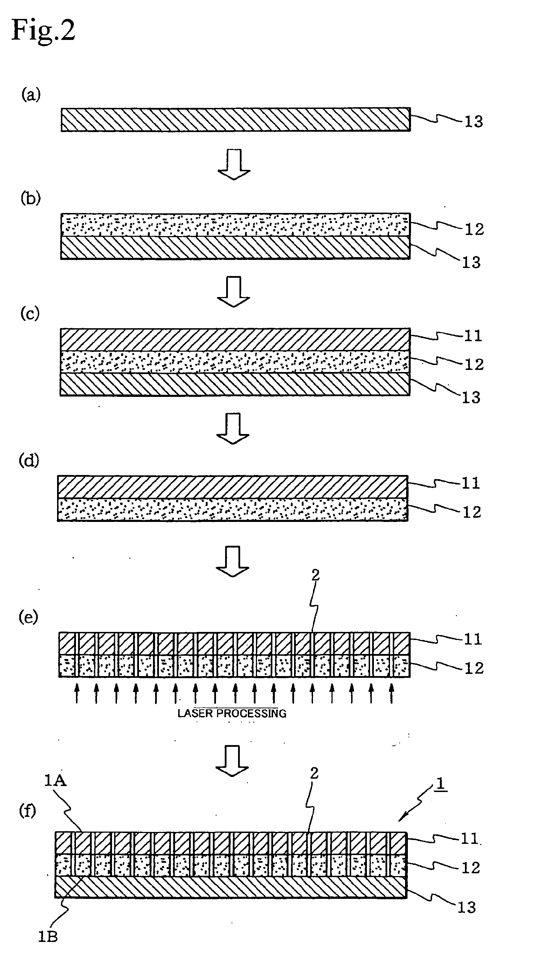

An example of a method of producing the pressure-sensitive adhesive sheet 1 according to the above embodiment will now be described with reference to FIGS. 2(a) to (f).

In the present producing method, firstly, as shown in FIGS. 2(a) and (b), the pressure-sensitive adhesive layer 12 is formed on the release treated surface of the release liner 13. The pressure-sensitive adhesive layer 12 may be formed by preparing a coating agent containing the pressure-sensitive adhesive that will constitute the pressure-sensitive adhesive layer 12, and also a solvent if desired, applying the coating agent onto the release treated surface of the release liner 13 using a coater such as a roll coater, a knife coater, a roll knife coater, an air knife coater, a die coater, a bar coater, a gravure coater, or a curtain coater, and drying.

Next, as shown in FIG. 2(c), the substrate 11 is superposed onto the surface of the pressure-sensitive adhesive layer 12, thus obtaining a laminate comprising the substrate 11, the pressure-sensitive adhesive layer 12, and the release liner 13. Then, as shown in FIG. 2(d), the release liner 13 is peeled off from the pressure-sensitive adhesive layer 12, then, as shown in FIG. 2(e), the through-holes 2 are formed in the laminate comprising the substrate 11 and the pressure-sensitive adhesive layer 12, and then, as shown in FIG. 2(f), the release liner 13 is superposed again onto the pressure-sensitive adhesive layer 12.

In the present producing method, the formation of the through-holes 2 is carried out by laser processing, the pressure-sensitive adhesive layer 12 being irradiated directly with a laser from the pressure-sensitive adhesive layer 12 side. By carrying out the laser processing from the pressure-sensitive adhesive layer 12 side in this way, even if the through-holes 2 become tapered, the diameter of the through-holes 2 can be made to be smaller on the substrate 11 side than on the pressure-sensitive adhesive layer 12 side, and hence it is easy to control the diameter of the through-holes 2 at the surface of the substrate 11 to be within the range described earlier (0.1 to 42 $\mu$m).

Moreover, by temporarily peeling off the release liner 13 and irradiating the pressure-sensitive adhesive layer 12 with the laser directly, there is no widening of the openings of each of the through-holes 2 in the pressure-sensitive adhesive layer 12 due to thermally melted matter from the release liner 13, and hence the degree of precision of the diameter and the hole density will be high, and thus through-holes 2 can be formed that will not be prone to being entered by water or the like which might have an adverse effect on the pressure-sensitive adhesive sheet 1. Furthermore, when irradiating the pressure-sensitive adhesive layer 12 with the laser, by making the release liner 13 not present therebetween, the laser irradiation time can be shortened, or the laser output energy can be reduced. If the laser output energy is reduced, then thermal effects on the pressure-sensitive adhesive layer 12 and the substrate 11 will be reduced, and hence it will be possible to form through-holes 2 of uniform shape with little melted matter (dross) and few thermally deformed portions due to heat from the laser.

There are no particular limitations on the type of the laser used in the laser processing; for example, a carbon dioxide ($CO_2$) laser, a TEA-$CO_2$ laser, a YAG laser, a UV-YAG laser, an excimer laser, a semiconductor laser, a $YVO_4$ laser, a YLF laser, or the like can be used.

In the present producing method, as the substrate 11, one formed by a casting method or the like using a casting sheet may be used; in this case, the casting sheet is laminated on the surface of the substrate 11. Moreover, in the present producing method, before carrying out the laser processing, a peelable protective sheet may be laminated onto the surface of the substrate 11 (on which a casting sheet has not been laminated) at a desired stage. As the protective sheet, for example a publicly known pressure-sensitive adhesive protective sheet comprising a substrate and a removable pressure-sensitive adhesive layer can be used.

When the through-holes 2 are formed through the laser processing, melted matter may become attached around the openings of the through-holes 2, but through the casting sheet or protective sheet being present on the surface of the substrate 11, the melted matter will become attached to the casting sheet or protective sheet rather than the substrate 11, and hence the appearance of the pressure-sensitive adhesive sheet 1 can be better maintained.

In the above case, when irradiating with the laser from the pressure-sensitive adhesive layer 12 side, the through-holes 2 must be formed in at least the pressure-sensitive adhesive layer 12 and the substrate 11; the through-holes 2 may formed as far as part way through the casting sheet or protective sheet, or may pass completely through the casting sheet or protective sheet.

Note that in the above producing method, the pressure-sensitive adhesive layer 12 was formed on the release liner 13, and then the substrate 11 was laminated onto the formed pressure-sensitive adhesive layer 12, but there is no limitation to this in the present invention, for example the pressure-sensitive adhesive layer 12 may be coated on the substrate 11 directly. Moreover, the laser processing may be carried out in a state with the release liner 13 laminated on, and furthermore the irradiation with the laser may be carried out from the side of the substrate 11 or a casting sheet or protective sheet as described above.

[Use of pressure-sensitive adhesive sheet]

When sticking the pressure-sensitive adhesive sheet 1 onto an adherend, firstly the release liner 13 is peeled off from the pressure-sensitive adhesive layer 12. In the case that there is a casting sheet or protective sheet through which the through-holes 2 do not pass on the substrate 11, the casting sheet or protective sheet is peeled off. In the case that the through-holes 2 pass through such a casting sheet or protective sheet, the casting sheet or protective sheet may be peeled off at this stage, or may be peeled off after the pressure-sensitive adhesive sheet 1 has been stuck on.

Next, the pressure-sensitive adhesive surface 1B of the pressure-sensitive adhesive layer 12 that has been exposed is made to be in close contact with the adherend, and then the pressure-sensitive adhesive sheet 1 is pressed onto the adherend. At this time, air between the adherend and the pressure-sensitive adhesive surface 1B of the pressure-sensitive adhesive layer 12 escapes from the through-holes 2 formed in the pressure-sensitive adhesive sheet 1 to the outside of the pressure-sensitive adhesive sheet front surface 1A, and hence air tends not to be caught up between the adherend and the pressure-sensitive adhesive surface 1B, i.e. air entrapment is prevented from occurring. Even if air is caught up so that air entrapment occurs, by re-pressing the air-entrapped portion or an air-entrapped portion surrounding portion including the air-entrapped portion, the air can be made to escape from the through-holes 2 to the outside of the pressure-sensitive adhesive sheet front surface 1A, thus eliminating the air entrapment. Such elimination of air entrapment is possible even after a long time has elapsed after the sticking on of the pressure-sensitive adhesive sheet 1.

Moreover, even if gas is emitted from the adherend after the pressure-sensitive adhesive sheet 1 has been stuck onto the adherend, this gas will escape from the through-holes 2 formed in the pressure-sensitive adhesive sheet 1 to the outside of the pressure-sensitive adhesive sheet front surface 1A, whereby the pressure-sensitive adhesive sheet 1 is prevented from blistering.

Moreover, according to the pressure-sensitive adhesive sheet 1 described above, even in the case that liquid becomes attached to the pressure-sensitive adhesive sheet 1 after the pressure-sensitive adhesive sheet 1 has been stuck onto an adherend, there will be no adverse effects due to the through-holes 2, the good appearance of the pressure-sensitive adhesive sheet 1 being maintained.

EXAMPLES

Following is a more detailed description of the present invention through examples and so on; however, the scope of the present invention is not limited by these examples and so on.

[Example 1]

A solvent type acrylic pressure-sensitive adhesive (made by LINTEC, PK) coating agent was applied using a knife coater such that the thickness after drying would be 30 $\mu$m onto the release treated surface of a release liner (made by LINTEC, FPM-11, thickness: 175 $\mu$m) obtained by laminating both surfaces of woodfree paper with a polyethylene resin and subjecting one surface to release treatment with a silicone type release agent, and drying was carried out for 1 minute at 90 °C. A black opaque substrate (thickness: 100 $\mu$m) made of a polyvinyl chloride resin having a surface roughness (Ra) of 0.266 $\mu$m, a chroma (C*) in the L*a*b* color system of 0.34 and a lightness (L*) of 26.56, and a contrast ratio of 99.9% was pressed onto the pressure-sensitive adhesive layer thus formed, whereby a laminate having a three-layer structure was obtained. The total thickness t of the substrate and the pressure-sensitive adhesive layer was 130 $\mu$m.

The measurement of the surface roughness (Ra) was carried out in accordance with JIS B0601, using an SV-3000S4 measurement apparatus made by MITUTOYO CORPORATION with a cutoff value $\lambda$C of 0.8 mm and an evaluation length In of 10mm. Themeasurement of the chroma (C*) and the lightness (L*) was carried out in accordance with JIS Z8729, by reflectometry using a simultaneous measurement type spectral color difference meter (made by NIPPON DENSHOKU INDUSTRIES CO., LTD., SQ-2000) as the measurement apparatus, a white board (L* = 92.47, a* = 0.61, b*=2.90) as a sample-holding stage, and a C light source with a 2° field (C/2) as a light source. The measurement of the contrast ratio was carried out in accordance with JIS K5400, using a SPECTRAFLASH SF600 plus CTC (spectrophotometer) made by DATACOLOR INTERNATIONAL (DCI) as the measurement apparatus. These measurement methods were the same hereinafter.

The release liner was peeled off from the laminate, and the laminate was irradiated with a $CO_2$ laser from the pressure-sensitive adhesive layer side, thus forming at a hole density of 2500 per 100 cm$^2$ through-holes having a diameter at the substrate surface of approximately 25 $\mu$m and a diameter at the pressure-sensitive adhesive surface of approximately 70 $\mu$m. The release liner was then superposed again onto the pressure-sensitive adhesive layer, whereby a pressure-sensitive adhesive sheet was obtained. Note that the diameter of the through-holes was measured using a scanning electron microscope (made by HITACHI LTD., model S-2360N) (likewise hereinafter).

For the pressure-sensitive adhesive sheet, the average volume V ($\mu$m$^3$/hole; likewise hereinafter) per through-hole in the substrate and the pressure-sensitive adhesive layer was $3.00 \times 10^5$, and hence V/t ($\mu$m$^2$/hole; likewise hereinafter) was $2.31 \times 10^3$. The average volume V per through-hole was calculated as follows (likewise for the other examples and comparative examples hereinafter).

$$\text{Average volume per hole } V = (1/A) \times (W_n - W) / (\text{Number of holes per 10 cm square})$$

A: density of laminate comprising substrate and pressure-sensitive adhesive layer not yet subjected to hole formation processing (measured on 10 cm square laminate)

$W_n$: weight of laminate (10 cm square) comprising substrate and pressure-sensitive adhesive layer not yet subjected to hole formation processing

W: weight of laminate comprising substrate and pressure-sensitive adhesive layer after subjecting to hole formation processing of forming 40,000 holes at 0.5 mm pitch (laminate with unwanted matter such as waste and dross produced through hole formation processing wiped away; 10 cm square)

[Example 2]

A pressure-sensitive adhesive sheet was produced as in Example 1, except that the through-holes were made to have a diameter at the substrate surface of approximately 40 $\mu$m. For the pressure-sensitive adhesive sheet, the average volume V per through-hole in the substrate and the pressure-sensitive adhesive layer was $3.65 \times 10^5$, and hence V/t was $2.81 \times 10^3$.

[Example 3]

A pressure-sensitive adhesive sheet was produced as in Example 2, except that the through-holes were made to have a diameter at the pressure-sensitive adhesive surface of approximately 120 $\mu$m. For the pressure-sensitive adhesive sheet, the average volume V per through-hole in the substrate and the pressure-sensitive adhesive layer was $1.03 \times 10^6$, and hence V/t was $7.92 \times 10^3$.

[Example 4]

A pressure-sensitive adhesive sheet was produced as in Example 1, except that a UV-YAG laser was used in the laser processing, and the through-holes were made to have a diameter at the substrate surface of approximately 30 $\mu$m, and a diameter at the pressure-sensitive adhesive surface of approximately 50 $\mu$m. For the pressure-sensitive adhesive sheet, the average volume V per through-hole in the substrate and the pressure-sensitive adhesive layer was $1.79 \times 10^5$, and hence V/t was $1.38 \times 10^3$.

[Example 5]

A pressure-sensitive adhesive sheet was produced as in Example 1, except that an excimer laser was used in the laser processing, and the through-holes were made to have a diameter at the substrate surface of approximately 0.1 to 10 $\mu$m, and a diameter at the pressure-sensitive adhesive surface of approximately 25 $\mu$m. For the pressure-sensitive adhesive sheet, the average volume V per through-hole in the substrate and the pressure-sensitive adhesive layer was $2.74 \times 10^4$, and hence V/t was $2.11 \times 10^2$.

[Example 6]

A pressure-sensitive adhesive sheet was produced as in Example 5, except that the through-holes were made to have a diameter at the substrate surface of approximately 40 $\mu$m, and a diameter at the pressure-sensitive adhesive surface of approximately 65 $\mu$m. For the pressure-sensitive adhesive sheet, the average volume V per through-hole in the substrate and the pressure-sensitive adhesive layer was $2.98 \times 10^5$, and hence V/t was $2.29 \times 10^3$.

[Example 7]

A pressure-sensitive adhesive sheet was produced as in Example 2, except that a black opaque substrate (thickness: 100 $\mu$m) made of a polyvinyl chloride resin having a surface roughness (Ra) of 0.507 $\mu$m, a chroma (C*) in the L*a*b* color system of 0.34 and a lightness (L*) of 26.58, and a contrast ratio of 98.4% was used as the substrate. For the pressure-sensitive adhesive sheet, the average volume V per through-hole in the substrate and the pressure-sensitive adhesive layer was $3.75 \times 10^5$, and hence V/t was $2.88 \times 10^3$.

[Example 8]

A pressure-sensitive adhesive sheet was produced as in Example 1, except that a black opaque substrate (thickness: 100 $\mu$m) made of a polyvinyl chloride resin having a surface roughness (Ra) of 0.220 $\mu$m, a chroma (C*) in the L*a*b* color system of 0.49 and a lightness (L*) of 25.81, and a contrast ratio of 99. 9% was used as the substrate, and the through-holes were made to have a diameter at the substrate surface of approximately 35 $\mu$m. For the pressure-sensitive adhesive sheet, the average volume V per through-hole in the substrate and the pressure-sensitive adhesive layer was $3.50 \times 10^5$, and hence V/t was $2.69 \times 10^3$.

[Example 9]

A pressure-sensitive adhesive sheet was produced as in Example 8, except that an excimer laser was used in the laser processing, and the through-holes were made to have a diameter at the substrate surface of approximately 40 $\mu$m, and a diameter at the pressure-sensitive adhesive surface of approximately 65 $\mu$m. For the pressure-sensitive adhesive sheet, the average volume V per through-hole in the substrate and the pressure-sensitive adhesive layer was $3.02 \times 10^5$, and hence V/t was $2.32 \times 10^3$.

[Example 10]

Using as a casting sheet a polyethylene terephthalate film (made by TEIJIN DUPONT FILMS Japan Limited, U4Z-50, thickness: 50 $\mu$m) one surface of which had been subjected to release treatment, a black opaque substrate (thickness: 55 $\mu$m) made of a polyvinyl chloride resin having a surface roughness (Ra) of 0.218 $\mu$m, a chroma (C*) in the L*a*b* color system of 0.78 and a lightness (L*) of 27.33, and a contrast ratio of 97.0% was formed using a casting method.
On the other hand, a pressure-sensitive adhesive layer was formed on a release liner as in Example 1, and then this pressure-sensitive adhesive layer and the above substrate with casting sheet were superposed together such that the pressure-sensitive adhesive layer and the opposite surface of the above substrate were attached firmly, whereby a laminate having a four-layer structure was obtained. The total thickness t of the substrate and the pressure-sensitive adhesive layer was 85 $\mu$m.

The release liner was peeled off from the laminate obtained, and the laminate was irradiated with a $CO_2$ laser from the pressure-sensitive adhesive layer side, thus forming at a hole density of 2500 per 100 cm$^2$ through-holes having a diameter at the substrate surface of approximately 30 $\mu$m and a diameter at the pressure-sensitive adhesive surface of approximately 70 $\mu$m. The release liner was then superposed again onto the pressure-sensitive adhesive layer, whereby a pressure-sensitive adhesive sheet was obtained.

For the pressure-sensitive adhesive sheet, the average volume V per through-hole in the substrate and the pressure-sensitive adhesive layer was $2.16 \times 10^5$, and hence V/t was $2.54 \times 10^3$.

[Example 11]

A black opaque substrate (thickness: 90 $\mu$m) made of a polyurethane resin having a surface roughness (Ra) of 0.211 $\mu$m, a chroma (C*) in the L*a*b* color system of 0.28 and a lightness (L*) of 25.41, and a contrast ratio of 99.9% was formed on a casting sheet as in Example 10. A pressure-sensitive adhesive sheet was produced as in Example 10, except that the substrate with casting sheet thus obtained was used, and the through-holes were made to have a diameter at the pressure-sensitive adhesive surface of approximately 65 $\mu$m. The total thickness t of the substrate and the pressure-sensitive adhesive layer was 120 $\mu$m. For the pressure-sensitive adhesive sheet, the average volume V per through-hole in the substrate and the pressure-sensitive adhesive layer was $2.98 \times 10^5$, and hence V/t was $2.48 \times 10^3$.

[Example 12]

Using as a casting sheet woodfree paper laminated on both surfaces thereof with polyethylene one surface of which had been subjected to release treatment with an alkyd type release agent (made by LINTEC Corporation, EKR90SKK, thickness: 95 $\mu$m), a dark red opaque substrate (thickness: 100 $\mu$m) made of a polyvinyl chloride resin having a surface roughness (Ra) of 0.273 $\mu$m, a chroma (C*) in the L*a*b* color system of 20.10 and a lightness (L*) of 34.48, and a contrast ratio of 98.1% was formed using a casting method.

A pressure-sensitive adhesive sheet was produced as in Example 10, except that the substrate with casting sheet obtained as described above was used, and the through-holes were made to have a diameter at the pressure-sensitive adhesive surface of approximately 75 $\mu$m. The total thickness t of the substrate and the pressure-sensitive adhesive layer was 130 $\mu$m. For the pressure-sensitive adhesive sheet, the average volume V per through-hole in the substrate and the pressure-sensitive adhesive layer was $3.67 \times 10^5$, and hence V/t was $2.82 \times 10^3$.

[Example 13]

A red opaque substrate (thickness: 70 $\mu$m) made of a polyvinyl chloride resin having a surface roughness (Ra) of 0.218 $\mu$m, a chroma (C*) in the L*a*b* color system of 58.50 and a lightness (L*) of 54.07, and a contrast ratio of 97.7% was formed on a casting sheet as in Example 10.

A pressure-sensitive adhesive sheet was produced as in Example 10, except that the substrate with casting sheet obtained as described above was used, and the through-holes were made to have a diameter at the substrate surface of approximately 25 $\mu$m, and a diameter at the pressure-sensitive adhesive surface of approximately 60 $\mu$m. The total thickness t of the substrate and the pressure-sensitive adhesive layer was 100 $\mu$m. For the pressure-sensitive adhesive sheet, the average volume V per through-hole in the substrate and the pressure-sensitive adhesive layer was $2.12 \times 10^5$, and hence V/t was $2.12 \times 10^3$.

[Example 14]

A green opaque substrate (thickness: 70 $\mu$m) made of a polyvinyl chloride resin having a surface roughness (Ra) of 0.212 $\mu$m, a chroma (C*) in the L*a*b* color system of 55.62 and a lightness (L*) of 51.84, and a contrast ratio of 98.8% was formed on a casting sheet as in Example 10.

A pressure-sensitive adhesive sheet was produced as in Example 10, except that the substrate with the casting sheet obtained as described above was used, and the through-holes were made to have a diameter at the substrate surface of approximately 25 $\mu$m, and a diameter at the pressure-sensitive adhesive surface of approximately 60 $\mu$m. The total thickness t of the substrate and the pressure-sensitive adhesive layer was 100 $\mu$m. For the pressure-sensitive adhesive sheet, the average volume V per through-hole in the substrate and the pressure-sensitive adhesive layer was $2.06 \times 10^5$, and hence V/t was $2.06 \times 10^3$.

[Example 15]

A yellow opaque substrate (thickness: 70 $\mu$m) made of a polyvinyl chloride resin having a surface roughness (Ra) of 0.230 $\mu$m, a chroma (C*) in the L*a*b* color system of 81.71 and a lightness (L*) of 79.80, and a contrast ratio of 98.8% was formed on a casting sheet as in Example 10.

A pressure-sensitive adhesive sheet was produced as in Example 10, except that the substrate with the casting sheet obtained as described above was used, and the through-holes were made to have a diameter at the substrate surface of approximately 25 $\mu$m, and a diameter at the pressure-sensitive adhesive surface of approximately 60 $\mu$m. The total thickness t of the substrate and the pressure-sensitive adhesive layer was 100 $\mu$m. For the pressure-sensitive adhesive sheet, the average volume V per through-hole in the substrate and the pressure-sensitive adhesive layer was $2.09 \times 10^5$, and hence V/t was $2.09 \times 10^3$.

[Example 16]

A pressure-sensitive adhesive layer was formed on a release liner as in Example 1, a black opaque substrate (thickness: 100 $\mu$m) made of a polyolefin type thermoplastic elastomer having a colorless transparent acrylic coating (thickness: 5 $\mu$m) on a surface thereof and having a surface roughness (Ra) of 0.373 $\mu$m, a chroma (C*) in the L*a*b* color system of 0.34 and a lightness (L*) of 27.39, and a contrast ratio of 99.3% was pressed onto the pressure-sensitive adhesive layer, and then a polyethylene film with removable pressure-sensitive adhesive layer (made by SUMIRON CO., LTD., E-212, thickness: 60 $\mu$m) was further stuck as a protective sheet onto the surface of the substrate, whereby a laminate having a four-layer structure was obtained. The total thickness t of the substrate and the pressure-sensitive adhesive layer was 130 $\mu$m.

The release liner was peeled off from the laminate, and the laminate was irradiated with a $CO_2$ laser from the pressure-sensitive adhesive layer side, thus forming at a hole density of 2500 per 100 cm$^2$ through-holes having a diameter at the substrate surface of approximately 20 $\mu$m and a diameter at the pressure-sensitive adhesive surface of approximately 120 $\mu$m. The release liner was then superposed again onto the pressure-sensitive adhesive layer, whereby a pressure-sensitive adhesive sheet was obtained.

For the pressure-sensitive adhesive sheet, the average volume V per through-hole in the substrate and the pressure-sensitive adhesive layer was $1.16 \times 10^6$, and hence V/t was $8.92 \times 10^3$.

[Example 17]

A pressure-sensitive adhesive layer was formed as in Example 1 on the release treated surface of a release liner (made by TOYOBO CO., LTD. , Crisper G-7223, thickness: 125 $\mu$m) obtained by subjecting one surface of a polyethylene terephthalate film to release treatment with a silicone type release agent, and a black opaque substrate (made by TEIJIN CHEMICALS LTD., ECOCAL $\alpha$ series black film, thickness: 45 $\mu$m) comprising a polyester type thermoplastic elastomer layer (thickness: 40 $\mu$m) with an anchor coat layer (thickness: 1 $\mu$m), a black colored layer (thickness: 2 $\mu$m) and a colorless transparent acrylic coating (thickness: 2 $\mu$m) laminated thereon in this order, and having a surface roughness (Ra) of 0.040 $\mu$m, a chroma (C*) in the L*a*b* color system of 1.77 and a lightness (L*) of 26.67, and a contrast ratio of 99.9% was superposed onto the pressure-sensitive adhesive layer. A polyethylene film with removable pressure-sensitive adhesive layer (made by SUMIRON CO., LTD., E-2035, thickness: 60 $\mu$m) was then further stuck as a protective sheet onto the surface of the substrate, whereby a laminate having a four-layer structure was obtained. The total thickness t of the substrate and the pressure-sensitive adhesive layer was 75 $\mu$m.

The release liner was peeled off from the laminate, and the laminate was irradiated with a $CO_2$ laser from the pressure-sensitive adhesive layer side, thus forming at a hole density of 2500 per 100 cm$^2$ through-holes having a diameter at the substrate surface of approximately 20 $\mu$m and a diameter at the pressure-sensitive adhesive surface of approximately 60 $\mu$m (the diameter being a maximum at the pressure-sensitive adhesive surface). The release liner was then superposed again onto the pressure-sensitive adhesive layer, whereby a pressure-sensitive adhesive sheet was obtained.

For the pressure-sensitive adhesive sheet, the average volume V per through-hole in the substrate and the pressure-sensitive adhesive layer was $1.48 \times 10^5$, and hence V/t was $1.97 \times 10^3$.

[Example 18]

A pressure-sensitive adhesive sheet was produced as in Example 1, except that a polyethylene terephthalate film one surface of which had been subjected to release treatment with a silicone type release agent (made by TOYO METALLIZING CO., LTD., Cerapeel BK(T), thickness: 38 $\mu$m) was used as the release liner, the irradiation with the $CO_2$ laser was carried out from the release liner side without peeling off the release liner, and the through-holes were made to have a diameter at the pressure-sensitive adhesive surface of approximately 65 $\mu$m. For the pressure-sensitive adhesive sheet, the average volume V per through-hole in the substrate and the pressure-sensitive adhesive layer was $2.89\times10^5$, and hence V/t was $2.22\times10^3$.

[Comparative Example 1]

A pressure-sensitive adhesive sheet was produced as in Example 1, except that the through-holes were made to have a diameter at the substrate surface of approximately 110 $\mu$m, and a diameter at the pressure-sensitive adhesive surface of approximately 170 $\mu$m. For the pressure-sensitive adhesive sheet, the average volume V per through-hole in the substrate and the pressure-sensitive adhesive layer was $2.30\times10^6$, and hence V/t was $1.77\times10^4$.

[Comparative Example 2]

A pressure-sensitive adhesive sheet was produced as in Example 16, except that the through-holes were made to have a diameter at the substrate surface of approximately 30 $\mu$m, and a diameter at the pressure-sensitive adhesive surface of approximately 180 $\mu$m. For the pressure-sensitive adhesive sheet, the average volume V per through-hole in the substrate and the pressure-sensitive adhesive layer was $2.81\times10^6$, and hence V/t was $2.16\times10^4$.

[Comparative Example 3]

A pressure-sensitive adhesive sheet was produced as in Example 1, except that the through-holes were made to have a diameter at the substrate surface of approximately 35 $\mu$m, and a diameter at the pressure-sensitive adhesive surface of approximately 140 $\mu$m. For the pressure-sensitive adhesive sheet, the average volume V per through-hole in the substrate and the pressure-sensitive adhesive layer was $4.75\times10^5$, and hence V/t was $3.65\times10^3$.

[Test]

For each of the pressure-sensitive adhesive sheets obtained in the Examples and the Comparative Examples, an air entrapment removability test and an appearance inspection were carried out as described below. The results are shown in Table 1.

Air entrapment removability test: The pressure-sensitive adhesive sheet from which any casting sheet or protective sheet had been peeled off and the release liner had been peeled off (size: 50 mm $\times$ 50 mm) was stuck onto a 70 mm $\times$ 70 mm melamine coated plate having therein a depression having the shape of part of a spherical surface with a diameter of 15 mm and a maximum depth of 1 mm (there was air entrapment between the depression and the pressure-sensitive adhesive sheet), and then the pressure-sensitive adhesive sheet was pressed on using a squeegee, and it was verified whether or not the air entrapment could be eliminated. Pressure-sensitive adhesive sheets for which the result was that the pressure-sensitive adhesive sheet followed the depression in the melamine coated plate and hence the air entrapment was eliminated were marked as "O", and ones for which the pressure-sensitive adhesive sheet did not follow the depression in the melamine coated plate and hence the air entrapment was not eliminated (including ones for which even a small amount of air entrapment remained) were marked as "$\times$" .

Appearance inspection: The pressure-sensitive adhesive sheet from which any casting sheet or protective sheet had been peeled off and the release liner had been peeled off (size: 30 mm $\times$ 30 mm) was stuck onto a white melamine coated plate, and it was inspected whether or not the through-holes could be seen on the surface of the pressure-sensitive adhesive sheet with the naked eye under indoor fluorescent lighting. The distance from the eyes to the pressure-sensitive adhesive sheet was made to be approximately 30 cm, and the angle from which the pressure-sensitive adhesive sheet was viewed was varied. Pressure-sensitive adhesive sheets for which the result was that the through-holes could not be seen were marked as "O", and ones for which the through-holes could be seen were marked as "$\times$". Next, the pressure-sensitive adhesive sheet was stuck onto a melamine coated plate and left for 24 hours, was then immersed in hot water at 40 ˚C for 168 hours or in gasoline at room temperature for 0.5 hours, and was then taken out and left for 48 hours, after which it was visually judged whether the appearance of the pressure-sensitive adhesive sheet had been marred through swelling of the through-hole portions or the like. Pressure-sensitive adhesive sheets for which the appearance was not marred were marked as "O", and ones for which the appearance was marred were marked as "$\times$".

[Table 1]

| | Air entrapment removability test | Appearance inspection | | |
| --- | --- | --- | --- | --- |
| | | Initially | After immersing in hot water | After immersing in gasoline |
| Example 1 | ○ | ○ | ○ | ○ |
| Example 2 | ○ | ○ | ○ | ○ |
| Example 3 | ○ | ○ | ○ | ○ |
| Example 4 | ○ | ○ | ○ | ○ |
| Example 5 | ○ | ○ | ○ | ○ |
| Example 6 | ○ | ○ | ○ | ○ |
| Example 7 | ○ | ○ | ○ | ○ |
| Example 8 | ○ | ○ | ○ | ○ |
| Example 9 | ○ | ○ | ○ | ○ |
| Example 10 | ○ | ○ | ○ | ○ |
| Example 11 | ○ | ○ | ○ | ○ |
| Example 12 | ○ | ○ | ○ | ○ |
| Example 13 | ○ | ○ | ○ | ○ |
| Example 14 | ○ | ○ | ○ | ○ |
| Example 15 | ○ | ○ | ○ | ○ |
| Example 16 | ○ | ○ | ○ | ○ |
| Example 17 | ○ | ○ | ○ | ○ |
| Example 18 | ○ | ○ | ○ | ○ |
| Comparative Example 1 | ○ | × | × | × |
| Comparative Example 2 | ○ | × | × | × |
| Comparative Example 3 | ○ | ○ | × | × |

As can be seen from Table 1, for the pressure-sensitive adhesive sheets satisfying the conditions of the present invention (Examples 1 to 18), the air escaping ability was excellent, and moreover the through-holes could not be seen with the naked eye initially, and the appearance was also good even after immersing in hot water or gasoline.

INDUSTRIAL APPLICABILITY

The pressure-sensitive adhesive sheet of the present invention can be favorably used in the case that air entrapment or blistering would be prone to occur with a general pressure-sensitive adhesive sheet, for example in the case that the pressure-sensitive adhesive sheet has a large area, or the case that gas is emitted from the adherend, and moreover a good appearance is required not only under an ordinary environment but also even under an environment in which liquid such as water or gasoline becomes attached.

**Claims**

1. A pressure-sensitive adhesive sheet comprising a substrate and a pressure-sensitive adhesive layer, the pressure-sensitive adhesive sheet having formed therein through laser processing a plurality of through-holes passing through from one surface to the other surface of the pressure-sensitive adhesive sheet wherein:

said through-holes have a diameter at a surface of said substrate of from 0.1 to 42 $\mu$m;
said through-holes have a diameter at a pressure-sensitive adhesive surface of said pressure-sensitive adhesive layer of from 0.1 to 125 $\mu$m;
taking a total thickness of said substrate and said pressure-sensitive adhesive layer to be t ($\mu$m), and a volume per said through-hole in said substrate and said pressure-sensitive adhesive layer to be V ($\mu$m$^3$/hole), following expression (1) is satisfied:

$$8.00\times10^{-3} \leq V/t \leq 1.00\times10^{4} \qquad (1);$$

and said through-holes have a hole density of from 30 to 50,000 per 100 cm$^2$.

2. The pressure-sensitive adhesive sheet according to claim 1, wherein said substrate has a surface roughness (Ra) of not less than 0.03 $\mu$m, a lightness (L*) in the L*a*b* color system of not more than 60 in the case of having a chroma (C*) of not more than 60 and a lightness (L*) of not more than 85 in the case of having a chroma (C*) greater than 60, and a contrast ratio of not less than 90%.

3. The pressure-sensitive adhesive sheet according to claim 1 or 2, wherein the diameter of said through-holes at the surface of said substrate is less than the diameter of said through-holes at the pressure-sensitive adhesive surface of said pressure-sensitive adhesive layer.

**Fig.1**

# Fig.2

(a)

(b)

(c)

(d)

(e)

LASER PROCESSING

(f)

### INTERNATIONAL SEARCH REPORT

| | International application No. |
|---|---|
| | PCT/JP2005/010511 |

A. CLASSIFICATION OF SUBJECT MATTER
Int.Cl$^7$  C09J7/02

According to International Patent Classification (IPC) or to both national classification and IPC

B. FIELDS SEARCHED

Minimum documentation searched (classification system followed by classification symbols)
Int.Cl$^7$  C09J7/02

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 1-125345 U  (Dainippon Printing Co., Ltd.),<br>25 August, 1989 (25.08.89),<br>Claims; examples<br>(Family: none) | 1,3<br>2 |
| A | JP 2003-183602 A  (Sekisui Chemical Co., Ltd.),<br>03 July, 2003 (03.07.03),<br>Par. Nos. [0023] to [0024]<br>(Family: none) | 1-3 |
| A | JP 4-55489 A  (Sekisui Chemical Co., Ltd.),<br>24 February, 1992 (24.02.92),<br>Claims<br>(Family: none) | 1-3 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 September, 2005 (16.09.05) | 04 October, 2005 (04.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 767 605 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H2107682 A
- JP H4100235 A